# FASCICULE DE BREVET EUROPEEN

(11) **EP 1 592 534 B1**
(45) Date de publication et mention de la délivrance du brevet: **17.06.2009**
(21) Numéro de dépôt: 04705430.9
(22) Date de dépôt: 27.01.2004
(51) Int. Cl.: B24B 9/14, B24B 41/06, B24B 5/02, B23B 25/06, B23Q 17/00, B24B 13/005

(54) **DISPOSITIF DE MEULAGE DE VERRES OPHTALMIQUES COMPORTANT DES MOYENS AMELIORES DE SERRAGE DE L EBAUCHE DU VERRE A MEULER**
VORRICHTUNG ZUM SCHLEIFEN VON OPHTHALMISCHEN LINSEN MIT VERBESSERTEM MITTEL ZUM FESTKLEMMEN DES GLASROHLINGS ZUM SCHLEIFEN
DEVICE FOR GRINDING OPHTHALMIC LENSES COMPRISING IMPROVED MEANS OF CLAMPING THE GLASS BLANK FOR GRINDING

(30) Priorité: 11.02.2003 FR 0301621
(43) Date de publication de la demande: 09.11.2005
(73) Titulaire: BRIOT INTERNATIONAL, 27340 Pont de l'Arche (FR)
(72) Inventeur: MEUNIER, Jean-Marc, F-76350 Oissel (FR); BIZET, Bruno, F-27460 Alizay (FR)
(74) Mandataire: Domenego, Bertrand
(86) Numéro de dépôt international: PCT/FR2004/000181
(87) Numéro de publication internationale: WO 2004/078414

(56) Documents cités:
- DE-A- 19 825 922
- US-A- 4 335 633
- US-A- 4 612 736
- US-A- 4 852 434
- US-A- 5 759 084

## Description

L'invention concerne un dispositif de meulage de verres ophtalmiques selon le préambule de la revendication 1.

Un tel dispositif est notamment décrit dans le brevet français publié sous le n° 2 720 021, auquel correspond US 5 759 084.

US 4,335,633 décrit une contre-poupée pour une machine d'usinage tournante, comprenant un actionneur électrique ayant une force de poussée pilotée.

Dans le dispositif qui fait l'objet de ce brevet antérieur, la partie d'appui est constituée d'une lame-ressort dont on mesure le débattement angulaire au niveau de son extrémité libre. Ainsi, la variable de contrôle est une variable de position de cette extrémité libre, donnée par un capteur de position, par exemple de type rhéostat.

On a constaté que l'implantation d'un dispositif de mesure de la force de réaction sur une machine de meulage de conception classique n'était envisageable, de façon pratique et à ces coûts acceptables, qu'avec des amplitudes de débattement de la lame-ressort de l'ordre de 2 à 3 mm. Or, les rhéostats couramment utilisés peuvent mesurer des amplitudes de déplacement de l'ordre de 15 mm.

Il en résulte la nécessité d'amplifier le signal de mesure délivré par le capteur de position, et par suite, une faible précision de la mesure.

Le but principal de l'invention consiste à améliorer la précision de l'effort de réaction, et par conséquents à accroître l'efficacité de l'asservissement de l'effort de serrage.

A cet effet, dans un dispositif de meulage conforme à la revendication 1, la partie d'appui est une butée fixe par rapport au chariot, et les moyens de commande comprennent une jauge de contrainte placée sur la butée fixe de façon à mesurer la contrainte axiale exercée par le deuxième organe de transmission, la variable de contrôle étant constituée par la contrainte axiale ainsi mesurée.

D'autres caractéristiques de l'invention sont décrites dans les sous-revendications 2 à 10.

Un procédé de serrage d'une ébauche d'un verre ophtalmique utilisant un dispositif selon l'invention est décrit dans la revendication 11.

Un mode particulier de réalisation de l'invention va maintenant être décrit plus en détail, en référence aux dessins annexés sur lesquels :
- la Figure 1 est une vue en coupe schématique partielle, dans un plan axial de l'arbre de serrage de l'ébauche, d'un dispositif de meulage conforme à l'invention ;
- la Figure 2 est une vue en coupe partielle et à plus grande échelle, dans le plan de la Figure 1, de la partie du dispositif comprenant les moyens de serrage de l'ébauche ; et
- la Figure 3 représente la courbe d'effort de serrage de l'ébauche produite par le dispositif selon l'invention, en fonction du temps, à partir de la mise en action du dispositif et pendant l'opération de meulage.

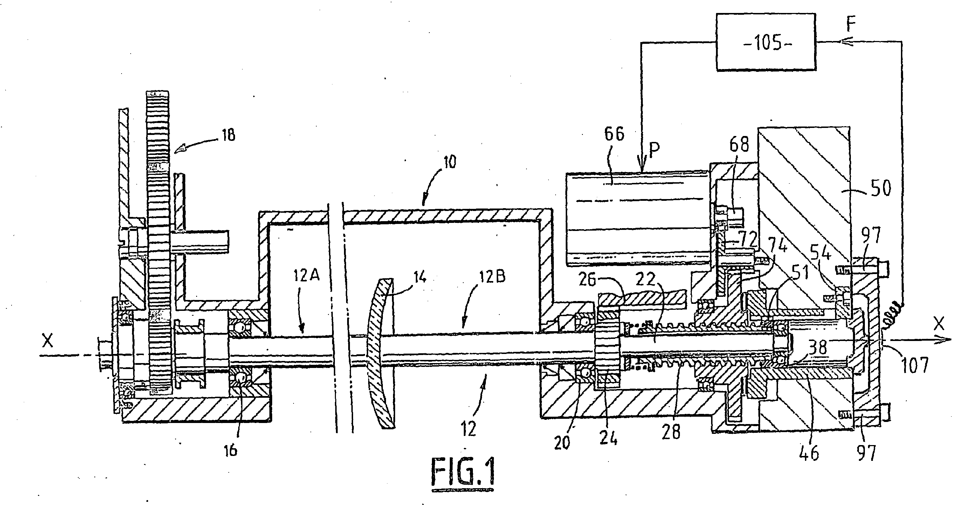

On a représenté sur la Figure 1, une partie de dispositif de meulage conforme à l'invention.

Ce dispositif comprend, de façon connue, un chariot 10 supportant à rotation un arbre 12 en deux parties (ou demi-arbres) 12A, 12B, entre lesquelles est maintenue une ébauche 14 d'un verre à meulier. L'arbre 12 sera aussi appelé « arbre de serrage ».

Un premier demi-arbre 12A, à gauche sur la Figure 1, est monté à rotation dans le chariot 10 au moyen d'un roulement 16, et est entraîné par un moteur principal (non représenté), par l'intermédiaire d'un train d'engrenages 18.

L'autre demi-arbre 12B, à droite de la Figure 1, est également monté à rotation dans le chariot 10 au moyen d'un roulement 20, dans lequel il peut également coulisser axialement. Le demi-arbre 12B sera, de ce fait, également appelé « demi-arbre mobile ».

Du côté de son extrémité opposée à l'ébauche 14, le deuxième demi-arbre 12B présente une section d'extrémité libre 22, sur laquelle est fixé un pignon d'entraînement à rotation 24. Ce pignon d'entraînement 24 est en prise avec un pignon 26 d'un train d'engrenages qui transmet au deuxième demi-arbre 12B le mouvement du moteur principal

Les trains d'engrenages et pignons d'entraînement associés à chacun des demi-arbres 12A, 12B sont conçus de façon que ces derniers soient entraînés en rotation à la même vitesse.

Le chariot 10 constitue un support mobile monté sur le bâti fixe d'une machine de meulage. Au cours d'une opération de meulage, le chariot est déplacé par rapport à l'axe d'un train de meules, suivant une loi de consigne en position liant la distance d'entraxe entre l'arbre 12 et l'arbre du train de meule, à la position angulaire de l'arbre 12.

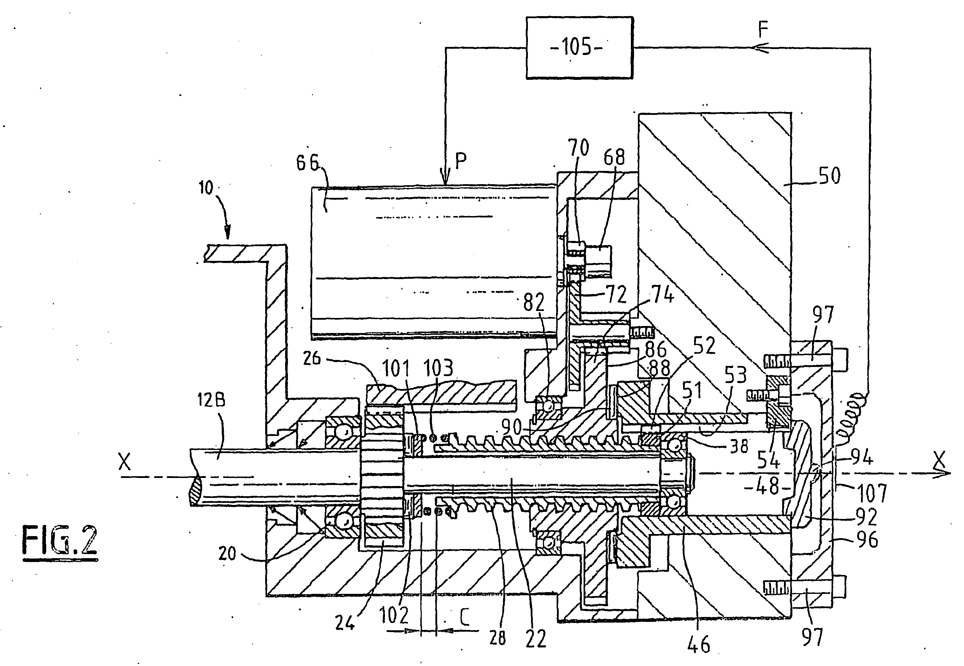

En se référant plus particulièrement à la Figure 2, on va maintenant décrire le mécanisme permettant de serrer l'ébauche 14 entre les deux demi-arbres 12A, 12B.

On supposera que le premier demi-arbre 12A est fixe en translation axiale par rapport au chariot 10, et qu'il supporte, à son extrémité située du côté du deuxième demi-arbre 12B, au moyen d'un adaptateur de meulage, l'ébauche 14 avant son serrage, comme cela est connu dans l'état de la technique.

La section d'extrémité 22 du deuxième demi-arbre 12B est munie d'un manchon coaxial 28 fileté extérieurement.

Un palier de roulement 38 est monté et immobilisé axialement sur la section d'extrémité 22, du côté de l'extrémité libre de cette dernière. Ce palier 38 est monté lui-même coulissant à l'intérieur d'une douille de réaction 46 emmanchés dans un alésage complémentaire axial 48 d'une partie massive 50 du chariot. Ladite partie massive 50 forme une paroi d'extrémité qui délimite axialement le chariot.

L'extrémité du manchon fileté 28 située du côté du palier 38 supporte extérieurement une bague solidaire 51. Cette bague 51 est munie d'un doigt radial 52 engagé dans une rainure axiale 53, formée dans la paroi intérieure de la douille de réaction 46. Grâce à la bague 51 et au doigt 52, le manchon fileté 28 est immobilisé en rotation par rapport à la douille de réaction 46, et guidé en translation axiale par rapport à cette dernière au moyen de la rainure 53. La douille de réaction 46 est elle-même immobilisée en rotation par rapport à la partie massive 50 au moyen d'une clavette 54 solidaire de la partie fixe 50, et qui fait saillie vers l'intérieur de l'alésage 48.

Le dispositif de meulage comprend en outre un moteur électrique 66 fixé à l'intérieur du chariot. Dans l'exemple représenté, l'arbre de sortie 68 du moteur 66 s'étend parallèlement à l'axe X-X de l'arbre de serrage 12. L'arbre de sortie 68 est solidaire d'un pignon moteur 70 qui entraîne un ensemble de transmission adapté pour déplacer axialement le demi-arbre 12B, dans une direction dépendante du sens de fonctionnement du moteur électrique 66, c'est-à-dire du sens de rotation de son arbre de sortie 68.

Cet ensemble de transmission comprend, dans l'exemple représenté, une double roue dentée 72 montée libre en rotation sur la partie massive 50, et en prise d'une part avec le pignon moteur 70, et d'autre part avec un organe de transmission 74 de l'ensemble de transmission.

L'organe de transmission 74 est formé, dans l'exemple représenté, d'un écrou complémentaire du manchon fileté 28, sur lequel il est monté en formant avec lui une liaison vis-écrou. L'organe de transmission 74 est monté libre en rotation sur le chariot 10 au moyen d'un palier de roulement 82, et comporte une denture extérieure radiale engrenant avec la roue dentée 72.

Une face radiale 86 de l'organe de transmission 74, tournée vers la douille de réaction 46, prend appui axialement contre une face radiale en vis-à-vis 88 de la douille de réaction 46, par l'intermédiaire d'une butée de roulement 90.

A son autre extrémité, la douille de réaction 46 est solidaire d'un embout de pression 92, qui présente un téton sensiblement hémisphérique 94 en saillie axiale, ledit téton 94 étant coaxial avec l'arbre 12 et la douille de réaction 46.

Le téton 94 vient en appui axial sur une plaque de réaction 96 fixée, par exemple par des vis 97 de façon démontable, sur la partie massive 50 du chariot. Cette plaque de réaction 96 forme une butée fixe solidaire du chariot 10. L'appui du téton 94 sur la plaque de réaction 96 est quasi-ponctuelle, ou tout au moins est réalisée sur une surface très faible devant la section de la douille de réaction 46 et devant la section maximale de l'arbre 12. Ainsi, les contraintes générées par l'appui de la douille de réaction 46 sur la plaque de réaction 96 sont concentrées autour de l'axe X-X de l'ensemble.

Le manchon fileté 28 peut coulisser axialement sur la section d'extrémité 22 selon une course C entre une première butée d'arbre et une deuxième butée d'arbre. La première butée d'arbre est définie par une rondelle 101 en appui axial sur une face du pignon d'entraînement 24 par l'intermédiaire d'une butée de roulement 102, tandis que la deuxième butée d'arbre est définie par la face du palier 38 tournée vers ladite rondelle 101.

Un ressort axial 103 est interposé axialement entre le manchon fileté 28 et la rondelle 101, de façon à solliciter axialement le manchon fileté 28 vers la deuxième butée d'arbre, c'est-à-dire vers le palier 38.

Les moyens de serrage comprennent en outre une unité 105 de commande du moteur électrique 66, qui délivre audit moteur électrique 66 une consigne, par exemple de puissance électrique P, de laquelle dépend l'effort de serrage.

Une jauge de contrainte 107 est disposée dans une région axiale de la plaque de réaction 96, par exemple sur une face externe de cette dernière opposée à la face d'appui du téton 94. La jauge 107 est reliée à l'unité de commande 105 de façon à lui transmettre un signal significatif de la contrainte axiale (assimilée à un effort axial F) exercée par la douille de réaction 46 sur la plaque de réaction 96.

L'unité de commande 105 élabore le signal de commande, correspondant à la consigne de puissance P délivrée au moteur électrique 66, en fonction de la variable de contrôle constituée par la contrainte mesurée F.

Le fonctionnement des moyens de serrage de l'ébauche 14 est exposé ci-après.

A partir d'une position initiale, dans laquelle l'ébauche est supportée par le premier demi-arbre 12A et le deuxième demi-arbre 12B vient au contact de l'ébauche sans exercer d'effort de serrage, le moteur électrique 66 est alimenté suivant une consigne de l'unité de commande 105, dans un premier sens de fonctionnement correspondant au serrage de l'ébauche.

Le manchon fileté 28, qui se trouve initialement en butée sur le palier 38, directement ou par l'intermédiaire de la bague 51, est alors entraîné en translation axiale vers la rondelle 101 par la rotation de la roue d'entraînement 74, à l'encontre du ressort 103.

L'effort de serrage exercé sur l'ébauche est alors sensiblement égal à l'effort de rappel élastique du ressort 103, lequel produit par réaction un effort de même intensité et de direction opposée sur la douille de réaction 46, par l'intermédiaire de l'écrou d'entraînement 74. Cet effort de réaction est intégralement transmis à la plaque de réaction 96 par l'intermédiaire de l'embout 92, et génère des contraintes de déformation sur ladite plaque 96, concentrées dans la région de la jauge de contrainte 67. Cette dernière détecte les contraintes exercées sur la plaque de réaction 96, et ainsi l'effort de réaction produit, directement lié à l'effort de serrage de l'ébauche.

Cette première phase dans laquelle l'effort de serrage correspond à l'effort de rappel du ressort 103 prend fin lorsque le manchon fileté 28 vient en butée sur la rondelle 101.

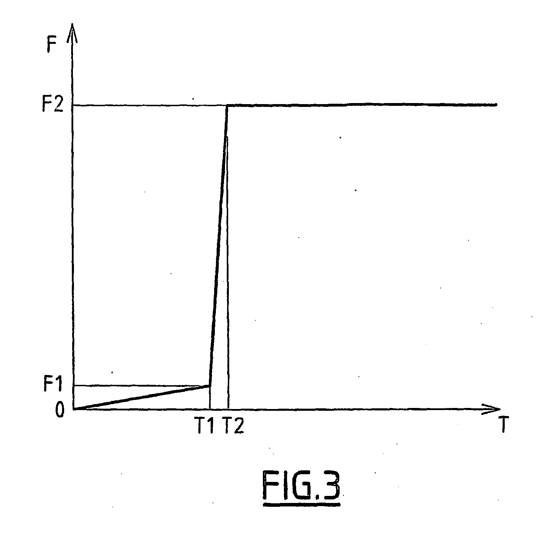

Sur la Figure 3, cette première phase est identifiée par l'intervalle de temps [0, T1], au terme duquel l'effort de serrage parvient à une première valeur intermédiaire F1. Durant cette phase de pré-serrage, l'effort varie linéairement avec le temps, de façon relativement lente.

Le moteur 66, commandé suivant ce premier sens de fonctionnement, provoque ensuite un accroissement brusque, sensiblement linéaire, de l'effort de serrage, jusqu'à une valeur souhaitée F2 atteinte au terme de l'intervalle de temps [T1, T2]. L'effort de réaction, sensiblement de même intensité et de direction opposée, est alors détecté par la jauge de contrainte 107.

Durant toute la phase de meulage, cet effort de serrage de l'ébauche souhaité F2 est maintenu par l'unité de commande 105, par asservissement de la puissance de consigne P à la valeur de contrainte F mesurée par la jauge 107.

A titre d'exemple, les valeurs de seuil de serrage F1 et F2 peuvent être choisies respectivement de l'ordre de 40 N et 600 N, et les valeurs correspondantes de temps T1 et T2 peuvent être choisies respectivement de l'ordre de 0,25 s et 0,35 s.

A la fin de l'opération de meulage, l'unité de commande 105 actionne le moteur en sens de fonctionnement inverse, de façon à déplacer le manchon fileté 28 vers la bague 51 et ensuite, lorsque le manchon fileté 28 arrive en butée sur la bague 51, déplacer solidairement le demi-arbre 12B vers la droite en desserrant l'ébauche.

L'invention qui vient d'être décrite permet d'obtenir une grande précision de la mesure d'effort de réaction, donc de l'effort de serrage, grâce à l'utilisation d'une jauge de contrainte. Cette précision élevée permet de maîtriser parfaitement l'effort de serrage au moyen d'un asservissement relativement simple.

En outre, un faible nombre de pièces participant au serrage de l'ébauche et à la mesure de l'effort de serrage sont mobiles axialement.

Dans l'agencement qui fait l'objet de l'invention, les moyens de mesure de l'effort de réaction sont placés vers l'extérieur du chariot et peuvent être facilement démontés, 1 et ainsi remplacés ou réparés.

D'autre part, l'interposition d'un ressort, entre d'une part le manchon fileté et d'autre part la rondelle qui forme la butée d'arbre dans le sens du serrage, permet d'obtenir un profil d'effort de serrage en fonction du temps présentant une faible pente, dans une première phase de fonctionnement, avant de parvenir à la valeur d'effort de serrage souhaitée, en régime permanent. Grâce à cette disposition, on évite d'endommager l'ébauche par un choc du demi-arbre mobile 12B sur cette dernière, et on permet à l'asservissement d'amener l'effort de serrage à la valeur souhaitée sans dépassement important de cette valeur et avec une convergence rapide.

## Revendications

1. Dispositif de meulage de verres ophtalmiques (14) comportant
- un chariot (10),
- un arbre supporté à rotation par ledit chariot et qui comprend deux parties (12A, 12B), dont au moins une partie (12B) est mobile axialement, lesdites deux parties étant prévues pour serrer entre elles une ébauche (14) d'un verre ophtalmique, et
- des moyens de serrage adaptés pour solliciter axialement au moins ladite partie d'arbre mobile (12B),
- lesdits moyens de serrage comportant à cet effet au moins un moteur (66), des moyens (105, 107) de commande du moteur pour faire varie sa force motrice, et donc l'effort axial de serrage de l'ébauche (14), en fonction d'une variable de contrôle (F), au moins deux organes complémentaires (28, 74) de transmission de la force du moteur (66), qui, pour un même sens de fonctionnement du moteur, peuvent d'une part exercer un effort axial sur la partie d'arbre mobile (12B), via un premier (28) desdits organes de transmission, et ainsi provoquer un serrage de l'ébauche, et d'autre part exercer un effort axial de réaction de direction opposée sur une partie d'appui (96) montée sur le chariot (10), via un deuxième (74) desdits organes de transmission,
dispositif dans lequel le premier organe de transmission (28) est monté libre en rotation sur la partie d'arbre mobile (228), et peut coulisser axialement sur la partie d'arbre mobile entre deux butées d'arbre (38, 101), la première (101) desdites butées d'arbre permettait l'entraînement de la partie d'arbre mobile (128) par le premier organe de transmission (28) dans le sens de serrage de l'ébauche,
**caractérisé en ce que** les moyens de serrage comprennent un organe (103) formant ressort axial interposé entre le premier organe de transmission (28) et la première butée d'arbre (101), ledit organe formant ressort (103) sollicitant le premier organe de transmission (28) vers la deuxième butée d'arbre (38), **en ce que** ladite partie d'appui (96) est une butée fixe par rapport au chariot (10), et les moyens de commande (105, 107) comprennent une jauge de contrainte (107) placée sur la butée fixe (96) de façon à mesurer la contrainte axiale exercée par le deuxième organe de transmission (74), la variable de contrôle (F) étant constituée par la contrainte axiale ainsi mesurée,
et **en ce que** les moyens de commande (105, 107) sont adaptés pour provoquer un effort de serrage (F) sur l'ébauche (14), qui varie avec le temps (T) de la façon suivante sur une phase de serrage :
- sensiblement linéairement sur une première phase de pré-serrage [0, T1] correspondant à une phase de compression de l'organe formant ressort (103), avec une première pente positive, jusqu'à une première valeur de seuil (F1) ;
- sensiblement linéairement sur une deuxième phase [T1, T2] plus courte que la première avec une deuxième pente positive très supérieure à la première, jusqu'à une deuxième valeur de seuil (F2), l'effort de serrage (F) restant ensuite sensiblement constant à cette deuxième valeur de seuil (F2) jusqu'au desserrage de l'ébauche.

2. Dispositif suivant la revendication 1, **caractérisé en ce que** lesdits premier (28) et deuxième (74) organes de transmission définissent ensemble une liaison vis-écrou.

3. Dispositif suivant la revendication 1 ou 2, **caractérisé en ce que** les moyens de serrage comprennent un organe intermédiaire de réaction (46) interposé axialement entre le deuxième organe de transmission (74) et la butée fixe (96), et bloqué en rotation par rapport au chariot (10).

4. Dispositif suivant la revendication 3, **caractérisé en ce que** les moyens de serrage comprennent des moyens (51, 52) d'arrêt en rotation du premier organe de transmission (28) sur l'organe intermédiaire de réaction (46) .

5. Dispositif suivant la revendication 3 ou 4, **caractérisé en ce que** l'organe intermédiaire de réaction (46) a une partie de pression (94) solidaire, destinée à porter sur la butée fixe (96), avec une surface d'appui très inférieure à la section d'arbre, notamment une surface d'appui quasi ponctuelle.

6. Dispositif suivant la revendication 5, **caractérisé en ce que** la partie de pression est un téton (94) sensiblement en saillie axiale de l'organe intermédiaire de réaction (46) coaxialement avec l'arbre (12).

7. Dispositif suivant l'une quelconque des revendications 1 à 6, **caractérisé en ce que** la butée fixe (96) est formée par une pièce rapportée sur le chariot (10), fixée rigidement de façon démontable.

8. Dispositif suivant la revendication 7, **caractérisé en ce que** ladite butée fixe (96) se comporte comme une pièce élastiquement déformable avec une raideur très supérieure à celle de l'organe formant ressort (103).

9. Dispositif suivant l'une quelconque des revendications 1 à 8, **caractérisé en ce que** la jauge de contrainte (107) est centrée sur l'axe (X-X) de l'arbre (12).

10. Dispositif selon l'une quelconque des revendications précédentes, **caractérisé en ce que** la première valeur de seuil de la première phase est obtenue lorsque le premier organe de transmission (28) vient en butée sur la première butée d'arbre (101).

11. Procédé de serrage d'une ébauche (14) d'un verre ophtalmique dans un dispositif de meulage selon l'une quelconque des revendications précédentes, **caractérisé en ce qu'**il comprend les étapes suivantes :
- on supporte l'ébauche (14) par la première partie d'arbre (12A) ;
- on amène au contact de l'ébauche la deuxième partie mobiles (12B) de l'arbre sans exercer d'effort de serrage ;
- on provoque un effort de serrage sur l'ébauche (14) à l'aide des moyens de commande (105, 107), l'effort de serrage variant avec le temps de la façon suivante sur une phase de serrage :
- sensiblement linéairement sur une première phase de pré-serrage [0, T1] correspondant à une phase de compression de l'organe formant ressort (103), avec une première pente positive, jusqu'à une première valeur de seuil (F1) ;
- sensiblement linéairement sur une deuxième phase [T1, T2] plus courte que la première avec une deuxième pente positive très supérieure à la première, jusqu'à une deuxième valeur de seuil (F2), l'effort de serrage (F) restant ensuite sensiblement constant à cette deuxième valeur de seuil (F2) jusqu'au desserrage de l'ébauche.

## Claims

1. A device for grinding ophthalmic glasses (14) comprising
- a carriage (10),
- a shaft supported for rotation by said carriage and which comprises two parts (12A,12B), of which at least one part (12B) is axially movable, said two parts being provided to clamp between them a blank (14) of an ophthalmic glass, and
- clamping means adapted to act axially on at least said movable shaft part (12B),
said clamping means comprising for this purpose at least one motor (66), control means (105,107) for the motor so as to vary its motive power and, therefore, the axial clamping force on the blank (14) as a function of a control variable (F), at least two complementary members (28,74) for transmitting the power of the motor (66), which members, for the same direction of operation of the motor, can exert, on the one hand, an axial force on the movable shaft part (12B) via a first one (28) of said transmission members and thereby bring about clamping of the blank, and, on the other hand, exert an axial reaction force in the opposite direction on a support part (96) mounted on the carriage (10) via second one (74) of said transmission members,
a device in which the first transmission member (28) is mounted to rotate freely on the movable shaft part (12B) and can slide axially on the movable shaft part between two shaft stops (38,101), the first one (101) of said shaft stops enabling the movable shaft part (12B) to be entrained by the first transmission member (28) in the clamping direction of the blank,
**characterised in that** the clamping means comprise a member (103) forming an axial spring interposed between the first transmission member (28) and the first shaft stop (101), said member (103) forming a spring urging the first transmission member (28) towards the second shaft stop (38), **in that** said support member (96) is a fixed abutment in relation to the carriage (10), and the control means (105,107) comprise a strain gauge (107) disposed on the fixed abutment (96) so as to measure the axial strain exerted by the second transmission member (74), the control variable (F) comprising the axial strain thus measured,
and **in that** the control means (105,107) are adapted to apply a clamping force (F) to the blank (14), which varies with the time (T) in the following manner over a clamping phase:
- substantially linearly over a first preclamping phase [0,T1] corresponding to a compression phase of the member (103) forming a spring, with a first positive gradient, up to a first threshold value (F1);
- substantially linearly over a second phase [T1,T2] shorter than the first phase with a second positive gradient which is much greater than the first gradient, up to a second threshold value (F2), the clamping force (F) then remaining substantially constant at this second threshold value (F2) until the unclamping of the blank.

2. A device according to claim 1, **characterised in that** said first (28) and second (74) transmission members define together a screw-nut connection.

3. A device according to claim 1 or 2, **characterised in that** the clamping means comprise an intermediate reaction member (46) which is interposed axially between the second transmission member (74) and the fixed abutment (96), and which is precluded from rotating relative to the carriage (10).

4. A device according to claim 3, **characterised in that** the clamping means comprise means (51,52) for locking in rotation the first transmission member (28) on the intermediate reaction member (46).

5. A device according to claim 3 or 4, **characterised in that** the intermediate reaction member (46) has an integral pressure part (94) intended to bear on the fixed abutment (96) with a bearing surface which is much smaller than the shaft section, in particular an almost point-like surface.

6. A device according to claim 5, **characterised in that** the pressure part is a substantially hemispherical projection protruding axially from the intermediate reaction member (46) coaxially to the shaft (12).

7. A device according to any one of the preceding claims 1 to 6, **characterised in that** the fixed abutment (96) is formed by a part mounted on the carriage (10) and fastened rigidly and detachably thereto.

8. A device according to claim 7, **characterised in that** the said fixed abutment (96) behaves like an elastically deformable part with much greater stiffness than that of the member (103) forming a spring.

9. A device according to any one of the preceding claims 1 to 8, **characterised in that** the strain gauge (107) is centred on the axis (X-X) of the shaft (12).

10. A device according to any one of the preceding claims, **characterised in that** the first threshold value of the first phase is obtained when the first transmission member (28) abuts against the first shaft stop (101).

11. A method of clamping a blank (14) of an ophthalmic glass in a grinding device according to any one of the preceding claims, **characterised in that** it comprises the following steps:
- the blank (14) is supported by the first shaft part (12A);
- the second movable part (12B) of the shaft is brought into contact with the blank without exerting clamping force;
- a clamping force is applied to the blank (14) by means of the control means (105,107), the clamping force varying with time in the following manner over a clamping phase:
- substantially linearly over a first preclamping phase [0,T1] corresponding to a compression phase of the member (103) forming a spring, with a first positive gradient, up to a first threshold value (F1);
- substantially linearly over a second phase [T1,T2] shorter than the first phase with a second positive gradient which is much greater than the first gradient, up to a second threshold value (F2), the clamping force (F) then remaining substantially constant at this second threshold value (F2) until the unclamping of the blank.

## Patentansprüche

1. Vorrichtung zum Schleifen von ophthalmischen Gläsern (14), umfassend:
- einen Schlitten (10)
- eine Rotationswelle, die von dem Schlitten gestützte wird und die zwei Teile (12A, 12B) einschließt, wovon mindestens ein Teil (12B) axial beweglich ist, wobei die zwei Teile vorgesehen sind, um zwischen ihnen einen Rohling (14) aus einem ophthalmischen Glas einzuspannen, und
- Einspannmittel, die dazu ausgelegt sind, mindestens den beweglichen Wellenteil (12B) axial zu belasten;
- wobei die Einspannmittel zu diesem Zweck mindestens einen Motor (66), Mittel (105, 107) zum Steuern des Motors, um seine Energie, und daher die axiale Spannkraft des Rohlings (14), in Funktion einer Kontrollvariablen (F) variieren zu lassen, mindestes zwei komplementäre Organe (28, 74) zur Übertragung der Kraft des Motors (66), die, für eine selbe Funktionsrichtung des Motors, einerseits eine axiale Kraft auf den beweglichen Wellenteil (12B) über ein erstes (28) der Transmissionsorgane ausüben können und somit ein Einspannen des Rohlings herbeiführen können und andererseits eine entgegengesetzt gerichtete axiale Rückstellkraft auf einen an dem Schlitten (10) befestigten Widerlager-Teil (96) über ein zweites (74) der Transmissionsorgane ausüben können, einschließen,
wobei in der Vorrichtung das erste Transmissionsorgan (28) frei in Rotation auf dem beweglichen Wellenteil (12B) montiert ist und axial auf dem beweglichen Wellenteil zwischen zwei Wellen-Anschlägen (38, 101) gleiten kann, wobei der erste (101) der Wellen-Anschläge den Antrieb des beweglichen Wellenteils (12B) durch das erste Transmissionsorgan (28) in Einspannrichtung des Rohlings ermöglicht,
**dadurch gekennzeichnet, dass** die Einspannmittel ein Organ (103) einschließen, das die axiale Federung bildet, die zwischen dem ersten Transmissionsorgan (28) und dem ersten Wellen-Anschlag (101) liegt,
wobei das Organ die Federung (103) bildet, die das erste Transmissionsorgan (28) gegen den zweiten Wellen-Anschlag (38) presst, **dadurch**, dass der Widerlager-Teil (96) ein bezüglich des Schlittens (10) feststehendes Widerlager ist und die Steuermittel (105, 107) ein Längungsmessgerät (107) einschließen, das auf dem feststehenden Widerlager (96) so angeordnet ist, dass die axiale Kraft gemessen wird, die von dem zweiten Transmissionsorgan (74) ausgeübt wird, wobei die Kontrollvariable (F) aus der so gemessenen axialen Kraft besteht,
und **dadurch**, dass die Steuermittel (105, 107) dazu ausgelegt sind, eine Spannkraft (F) auf den Rohling (14) hervorzurufen, die mit der Zeit (T) auf die folgende Weise über eine Einspannphase variiert:
- im Wesentlichen linear über eine erste Phase der Vorspannung [0, T], entsprechend einer Kompressionsphase des Organs, das die Federung (103) bildet, mit einem ersten positiven Anstieg, bis zu einem ersten Schwellwert (F1);
- im Wesentlichen linear über eine zweite Phase [T1, T2], die kürzer ist als die erste Phase, mit einem zweiten positiven Anstieg, der sehr viel größer ist als der erste Anstieg, bis zu einem zweiten Schwellwert (F2), wobei die Spannkraft (F) anschließend im Wesentlichen bei diesem zweiten Schwellwert (F2), bis zur Lockerung des Rohlings, konstant bleibt.

2. Vorrichtung nach Anspruch 1, **dadurch gekennzeichnet, dass** die ersten (28) und zweiten (74) Transmissionsorgane zusammen eine Schrauben-Mutter-Verbindung definieren.

3. Vorrichtung nach Anspruch 1 oder 2,
**dadurch gekennzeichnet, dass** die Einspannmittel ein zwischengeschaltetes Rückstellorgan (46) einschließen, das axial zwischen dem zweiten Transmissionsorgan (74) und dem festen Widerlager (96) liegt und in der Rotation bezüglich des Schlittens (10) blockiert ist.

4. Vorrichtung nach Anspruch 3, **dadurch gekennzeichnet, dass** die Einspannmittel Mittel (51, 52) zum Anhalten der Rotation des ersten Transmissionsorgans (28) auf dem zwischengeschalteten Rückstellorgan (46) einschließen.

5. Vorrichtung nach Anspruch 3 oder 4, **dadurch gekennzeichnet, dass** das zwischengeschaltete Rückstellorgan (46) einen fest verbundenen Druckteil (94) aufweist, der dazu bestimmt ist, auf dem feststehenden Widerlager (96), mit einer Auflagefläche, die sehr viel kleiner ist als der Wellenquerschnitt, insbesondere einer quasi punktförmigen Auflagefläche, aufzuliegen.

6. Vorrichtung nach Anspruch 5, **dadurch gekennzeichnet, dass** der Druckteil eine im Wesentlichen halbkugelige Kuppe (94) ist, die axial von dem zwischengeschalteten Rückstellorgan (46), koaxial mit der Welle (12) emporragt.

7. Vorrichtung nach einem der Ansprüche 1 bis 6, **dadurch gekennzeichnet, dass** das feststehende Widerlager (96) durch ein auf dem Schlitten (10) zusammengesetztes Element gebildet wird, das abnehmbar starr befestigt ist.

8. Vorrichtung nach Anspruch 7, **dadurch gekennzeichnet, dass** das feststehende Widerlager (96) sich wie ein verformbares elastisches Element verhält, mit einer sehr viel größeren Starrheit als diejenige des Organs, das die Federung (103) bildet.

9. Vorrichtung nach einem der Ansprüche 1 bis 8, **dadurch gekennzeichnet, dass** das Längungsmessgerät (107) auf der Achse (X-X) der Welle (12) zentriert ist.

10. Vorrichtung nach einem der vorhergehenden Ansprüche, **dadurch gekennzeichnet, dass** der erste Schwellwert der ersten Phase erhalten wird, wenn das erste Transmissionsorgan (28) an dem ersten Wellen-Anschlag (101) anschlägt.

11. Verfahren zum Einspannen eines Rohlings (14) aus einem ophthalmischen Glas in eine Schleifvorrichtung nach einem der vorhergehenden Ansprüche,
**dadurch gekennzeichnet, dass** es die folgenden Schritte einschließt:
- Stützen des Rohlings durch den ersten Wellenteil (12A);
- in Kontakt bringen des Rohlings mit dem zweiten beweglichen Teil (12B) der Welle, ohne Spannkraft auszuüben;
- Herbeiführen einer Spannkraft auf den Rohling (14) mit Hilfe von Steuermitteln (105, 107), wobei die Spannkraft mit der Zeit auf folgende Weise über eine Einspannphase variiert:
- im Wesentlichen linear über eine erste Vorspannungsphase [0, T1], entsprechend einer Kompressionsphase des Organs, das die Federung (103) bildet, mit einem ersten positiven Anstieg bis zu einem ersten Schwellwert (F1);
- im Wesentlichen linear über eine zweite Phase [T1, T2], die kürzer ist als die erste Phase, mit einem zweiten positiven Anstieg, der sehr viel größer ist als der erste Anstieg, bis zu einem zweiten Schwellwert (F2), wobei die Spannkraft (F) anschließend im Wesentlichen bei diesem zweiten Schwellwert (F2) bis zur Lockerung des Rohlings konstant bleibt.
